# EUROPÄISCHE PATENTSCHRIFT

(11) **EP 0 248 334 B1**
(45) Veröffentlichungstag und Bekanntmachung des Hinweises auf die Patenterteilung: **13.01.1993**
(21) Anmeldenummer: 87107657.6
(22) Anmeldetag: 26.05.1987
(51) Int. Cl.: C09B 51/00, D06P 1/19, C09B 67/22

(54) **Verfahren zur Herstellung von 2-Nitro-4-sulfamyl-diphenylamin-Farbstoffen**
Process for the manufacture of 2-nitro-4-sulfamyl-diphenyl amine dyes
Procédé de fabrication de colorants de la 2-nitro 4-sulfamoyl-diphénylamine

(30) Priorität: 30.05.1986 DE 3618219
(43) Veröffentlichungstag der Anmeldung: 09.12.1987
(73) Patentinhaber: HOECHST AKTIENGESELLSCHAFT, 65926 Frankfurt am Main (DE)
(72) Erfinder: Brodt, Werner, Dr., D-6234 Hattersheim am Main (DE); Papenfuhs, Theodor, Dr., D-6000 Frankfurt am Main (DE)

(56) Entgegenhaltungen:
- GB-A- 585 940
- GB-A- 794 176
- US-A- 2 511 547
- CHEMICAL ABSTRACTS, Band 97, Nr. 12, September 1982, Seite 92, Zusammenfassung Nr. 93955f, Columbus, Ohio, US; & CS-A-191 522 (F. VYSKOCIL et al.) 15-12-1981 (Kat. D)

## Beschreibung

Die Erfindung betrifft ein verbessertes Verfahren zur Herstellung von 2-Nitro-4-sulfamyl-diphenylamin-Farbstoffen, sowie ein verbessertes Verfahren zur Herstellung des bei der Synthese dieser Farbstoffe als Zwischenprodukt eingesetzten 4-Chlor-3-nitro-benzolsulfochlorids.

Die Herstellung von 2-Nitro-4-sulfamyl-diphenylamin-Farbstoffen aus 4-Chlor-3-nitrobenzolsulfochlorid ist an sich bekannt. So wird in der SU-Patentschrift 833 956 die Herstellung des Farbstoffs 2-Nitro-1,1ʹ-diphenylamin-4-sulfanilid durch Umsetzung von 4-Chlor-3-nitrobenzolsulfochlorid mit einem Überschuß von Anilin (6 %) in Gegenwart eines kondensierenden Agens (Calciumcarbonat oder Magnesiumcarbonat) und eines Tensids (Kondensationsprodukt von Naphthalin-2-sulfonsäure mit Formaldehyd) bei Temperaturen von 20-100°C mit anschließender Fällung des Zielprodukts beschrieben. In der genannten Patentschrift wird hervorgehoben, daß die Verwendung von Salzen der Alkalimetalle als Neutralisationsmittel zur Bildung von Nebenprodukten führt, wobei insbesondere der Einsatz von Soda zu einer teilweisen Verseifung von 4-Chlor-3-nitrobenzolsulfochlorid zur Sulfonsäure führt, was Nichtreproduzierbarkeit des Verfahrens und niedrige Farbstoffausbeuten bedingt.

Ferner wird in der CSSR-PS 191 522 ein zum Verfahren der genannten SU-PS analoges Herstellungsverfahren beschrieben, wobei die Verwendung von Carbonaten der Alkalimetalle als basische Kondensationsmittel offenbart wird. Für die Gewinnung der reinen 2-Nitro-4-sulfamyl-diphenylamin-Farbstoffe ist aber deren Reinigung durch Umlösen (Überführung in das Natriumsalz und Ausfällen der stabilen α-Modifikation durch Neutralisieren mit Ammoniumchlorid oder Ammoniumsulfat) bei 70-100°C erforderlich. Dieser Reinigungsschritt hat eine erhöhte Salzbelastung des Abwassers und einen erhöhten Energiebedarf zur Folge, wodurch dieses bekannte Verfahren in ökologischer und ökonomischer Hinsicht Nachteile aufweist. Hinzukommt, daß bei diesem bekannten Verfahren gasförmiges Ammoniak entsteht, das eine technisch aufwendige Abgaswäsche erforderlich macht und toxikologische Probleme hinsichtlich des Abwassers aufwirft.

Es wurde nun überraschenderweise gefunden, daß bei Einsatz von hochreinem 4-Chlor-3-nitrobenzolsulfochlorid die Verwendung basisch reagierender Salze von Alkalimetallen nicht zu den in der zitierten SU-PS beschriebenen Nebenreaktionen mit den damit verbundenen Nachteilen, wie niedrige Farbstoffausbeute und Nichtreproduzierbarkeit des Verfahrens führt. Vielmehr erhält man bei Verwendung von hochreinem 4-Chlor-3-nitrobenzolsulfochlorid (nach dem vorliegenden Verfahren) die 2-Nitro-4-sulfamyl-diphenylamin-Farbstoffe in guten bis sehr guten Ausbeuten mit einem sehr hohen Reingehalt (> 99 %, ermittelt durch HPLC (= high performance liquid chromatography)) in der stabilen α-Modifikation, wodurch die Reinigung des Farbstoffs durch einen Umlöseprozeß, wie er in der zitierten CSSR-PS beschrieben wird, entfällt. Dies bedingt in ökonomischer und ökologischer Hinsicht einen erheblichen Vorteil gegenüber dem Stand der Technik, wie er sich aus der SU-PS 833956 bzw. CSSR-PS 191522 ergibt. So konnte beim erfindungsgemäßen Verfahren die Raum-Zeit-Ausbeute beträchtlich verbessert werden.

Daraus wird ersichtlich, daß es von großer Bedeutung ist, das für die Synthese der genannten Farbstoffe einzusetzende 4-Chlor-3-nitrobenzolsulfochlorid in hochreiner Form herstellen zu können. Die Herstellung von hochreinem 4-Chlor-3-nitrobenzolsulfochlorid stellt ein Merkmal des erfindungsgemäßen Verfahrens dar.

Das aus Chem. Ber. 24, 3185 (1891) bekannte Verfahren zur Herstellung von 4-Chlor-3-nitrobenzolsulfochlorid durch Sulfieren von o-Nitrochlorbenzol und das aus der Britischen Patentschrift 585940 bekannte Verfahren zur Herstellung des genannten Sulfochlorids durch Umsetzen der freien Sulfonsäure bzw. deren Natriumsalz mit Phosphorpentachlorid führen nicht zu dem erforderlichen hochreinen Produkt. In der Britischen Patentschrift 625 757 und in der US-PS 2 511 547 wird zwar ein verbessertes Verfahren zur Herstellung von 4-Chlor-3-nitrobenzolsulfochlorid durch Umsetzung von o-Nitrochlorbenzol mit der 4-5 molaren Menge Chlorsulfonsäure beschrieben, jedoch liegen die Nachteile dieses Verfahrens im Anfall erheblicher Mengen Abfallschwefelsäure sowie in der anzuwendenden hohen Reaktionstemperatur, wodurch sicherheitstechnische Probleme entstehen.

Es wurde gefunden, daß man das 4-Chlor-3-nitrobenzolsulfochlorid in hochreiner Form herstellen kann, indem man o-Nitrochlorbenzol mit Chlorsulfonsäure bei Temperaturen von 100-110°C sulfoniert und die erhaltene Sulfonsäure mit Thionylchlorid bei 40-80°C, vorzugsweise 65-78°C in das entsprechende Sulfochlorid überführt. Hierbei ist es zweckmäßig, 2,0 bis 3,5 Mol, vorzugsweise 2,5 bis 3,0 Mol Chlorsulfonsäure auf 1 Mol o-Nitrochlorbenzol einwirken zu lassen. Ein größerer Überschuß an Chlorsulfonsäure ist zwar nicht schädlich, beeinträchtigt jedoch die Wirtschaftlichkeit des Verfahrens. Für die Überführung der Sulfonsäure in das Sulfochlorid setzt man zweckmäßigerweise das Thionylchlorid in höchstens molarer Menge, bezogen auf das o-Nitrochlorbenzol, ein. Im allgemeinen ist es ausreichend, ein Molverhältnis von 1 : 0,5 bis 1 : 1,0 anzuwenden. Bevorzugt wird ein Molverhältnis von 1 : 0,7 - 1 : 0,9, weil hierbei die Reaktion hinreichend rasch und in sehr guten Ausbeuten abläuft. Das erhaltene 4-Chlor-3-nitrobenzolsulfochlorid wird in üblicher Weise auf Eis kristallisiert und technisch feucht, beispielsweise in Form einer 90 %igen Feuchtpaste, isoliert.

Die Ausbeute an 4-Chlor-3-nitrobenzolsulfochlorid (frei von Sulfonsäure) beträgt 94-97 % der Theorie bei einem Reingehalt von ≧99,5 % (Fp: 59-60°C). Ausbeute und Reinheit des Produktes sind damit wesentlich höher als bei dem in der Britischen Patentschrift 625,757 beschriebenen Verfahren (88 % Rohausbeute, Fp. 50°C).

Durch die hohe Reinheit des nach dem erfindungsgemäßen Verfahren hergestellten 4-Chlor-3-nitrobenzolsulfochlorids ergeben sich unvorhergesehene Vorteile bei der Herstellung von 2-Nitro-4-sulfamyl-diphenylamin-Farbstoffen, insbesondere hinsichtlich Ausbeute und Reinheit.

Gegenstand der vorliegenden Erfindung ist somit ein verbessertes Verfahren zur Herstellung von 2-Nitro-4-sulfamyl-diphenylamin-Farbstoffen der allgemeinen Formel (1) 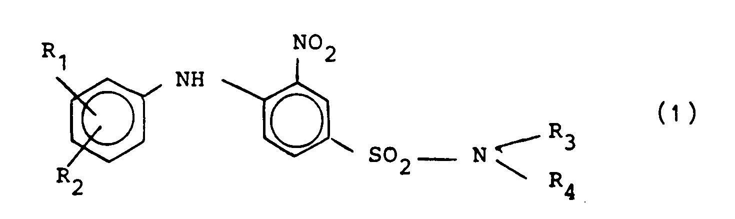
in welcher R₁ und R₂ je ein Wasserstoff-, Chlor- oder Bromatom oder eine Alkyl (C₁-C₄)-oder Alkoxy (C₁-C₄)-gruppe oder eine Phenoxygruppe, welche am Benzolkern durch Chlor- oder Bromatome oder Alkyl (C₁-C₄)-, Alkoxy (C₁-C₄)-oder Trifluormethylgruppen substituiert sein kann, oder eine Naphthyloxygruppe bedeuten, wobei R₁ und R₂ gleich oder verschieden sein können, und R₂ darüber hinaus auch eine -N(Alkyl (C₁-C₄))₂-, -NH (Alkyl (C₁-C₄))-,-NH-Alkyloyl (C₁-C₄)- oder -NH-Benzoylgruppe sein kann, R₃ und R₄ je ein Wasserstoffatom oder eine Alkyl (C₁-C₄)-, Alkoxy (C₁-C₂)-alkyl (C₁-C₄)- oder Cycloalkyl (C₅-C₆)-gruppe bedeuten, wobei R₃ und R₄ gleich oder verschieden sein können, und R₄ darüber hinaus eine Phenylgruppe sein kann, welche durch Chlor- oder Bromatome oder Alkyl (C₁-C₄)-, Alkoxy (C₁-C₄)-, -N(Alkyl (C₁-C₄))₂-, -NH(Alkyl (C₁-C₄))-, -NH-Alkyloyl (C₁-C₄)-, -NH-Benzoyl-, Phenoxy- oder Naphthyloxygruppen substituiert sein kann, wobei die Phenoxygruppen am Benzolkern durch Chlor- oder Bromatome oder Alkyl (C₁-C₄)-, Alkoxy (C₁-C₄)- oder Trifluormethylgruppen substituiert sein kann, indem man o-Nitrochlorbenzol mit Chlorsulfonsäure bei Temperaturen von etwa 100-110°C sulfoniert zur 4-Chlor-3-nitrobenzolsulfonsäure der Formel (2) 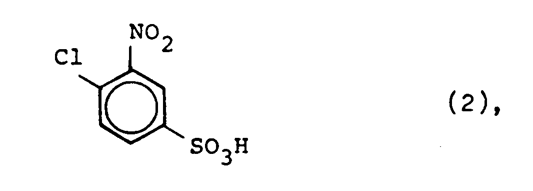
diese mit Thionylchlorid bei etwa 70-80°C in hochreines 4-Chlor-3-nitrobenzolsulfochlorid überführt, letzteres durch Aufbringen des Reaktionsgemisches auf Eis kristallin abscheidet und das erhaltene 4-Chlor-3-nitrobenzolsulfochlorid zunächst mit einem in einer wäßrigen Lösung eines basischen Kondensationshilfsmittels suspendierten oder gelösten aliphatischen oder aromatischen Amin der allgemeinen Formel 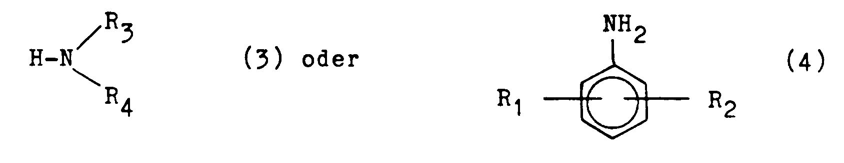
worin R₁, R₂, R₃ und R₄ die vorstehend genannten Bedeutungen haben, in Gegenwart eines ionischen oder nichtionischen Tensids bei Temperaturen von etwa 5 bis 50°C und bei pH-Werten von 7,5 bis 12,5, dann mit einem in einer wässrigen Lösung eines basischen Kondensationshilfsmittels suspendierten oder gelösten aromatischen Amin der genannten allgemeinen Formel (4) bei Temperaturen von etwa 80 bis 100°C innerhalb des genannten pH-Bereichs in Gegenwart eines Tensids der genannten Art zu den Farbstoffen der genannten Formel (1) kondensiert.

Als basische Kondensationshilfsmittel bei der Umsetzung des hochreinen 4-Chlor-3-nitrobenzolsulfochlorids mit einem Amin der genannten Formel (3) oder (4) kommen basisch reagierende Alkalimetallsalze, wie beispielsweise Natriumcarbonat, Natriumhydrogencarbonat, Kaliumcarbonat, Kaliumhydrogencarbonat oder verdünnte wäßrige Lösungen von Lithium-, Natrium- oder Kaliumhydroxid, in Betracht.

Bei der Umsetzung des 4-Chlor-3-nitrobenzolsulfochlorids reagiert zunächst, d.h. in erster Stufe, das Chloratom der Sulfochloridgruppe mit einem aliphatischen Amin der Formel (3) oder mit einem aromatischen Amin der Formel (4), und anschliessend in zweiter Stufe das aromtisch gebundene Chloratom mit einem aromatischen Amin der Formel (4).

Setzt man auch in erster Stufe mit einem aromatischen Amin um, so können die in erster und zweiter Stufe eingesetzten aromatischen Amine der allgemeinen Formel (4) gleich oder verschieden sein.

Der Vorteil dieses Verfahrens liegt darin, daß im Zuge einer einfachen Eintropfreaktion 2-Nitro-4-sulfamyl-diphenylamin-Farbstoffe der allgemeinen Formel (1), die am Stickstoffatom der Sulfonamidgruppe durch einen aliphatischen oder cycloaliphatischen bzw. einen ggf. substituierten Phenylrest substituiert sein können, ohne Isolierung einer Zwischenstufe in hoher Ausbeute und in sehr hoher Reinheit zugänglich sind. Farbstoffe dieser Art mußten bisher in mehreren Reaktionsschritten, beispielsweise durch Umsetzung von 4-Chlor-3-nitrobenzolsulfonsäure mit einem aromatischen Amin, Zwischenisolierung der entstandenen Diphenylaminsulfonsäure und Überführung in das Sulfochlorid sowie nachfolgende Reaktion mit einem aliphatischen bzw. ggf. substituierten aromatischen Amin in technisch nachteiliger Weise hergestellt werden.

Bei der Kondensation des 4-Chlor-3-nitro-benzolsulfochlorids mit einem Amin der genannten Formel (3) und/oder (4) wird zweckmäßigerweise im einzelnen wie folgt verfahren:
Das Amin wird in einer wäßrigen Lösung des basischen Kondensationshilfsmittels suspendiert oder gelöst und ein lösungsvermittelndes Tensid in geringer Menge, zweckmäßigerweise in einer Menge von etwa 1 bis 10 Gewichtsprozent, bezogen auf das Säurechlorid, zugesetzt. Anschließend wird das feuchte 4-Chlor-3-nitrobenzolsulfochlorid in Abhängigkeit von der Art des basischen Kondensationshilfsmittels bei etwa 5 bis 45°C in Anteilen oder kontinuierlich in die wäßrige Suspension der Reaktionspartner eingetragen. Dann wird die Reaktionsmischung auf 35-45°C erwärmt und bei pH 7,5 bis 12,5, vorzugsweise bei pH 8,5 bis 9,5 2 bis 5 Stunden gerührt. Nun wird auf 100°C erwärmt und bei oben genannten pH-Werten 7 bis 10 Stunden gerührt. Anschließend werden im Falle der Anwendung von aromatischen Aminen, welche in einem Überschuß von 1 bis 5 %, vorzugsweise 2,5 %, bezogen auf eingesetztes 4-Chlor-3-nitrobenzolsulfochlorid, verwendet werden, die Amine durch Einleiten von Dampf aus der Reaktionsmischung vollständig entfernt.
Der Farbstoff der allgemeinen Formel (1) kristallisiert bereits während der Wasserdampfdestillation aus und wird nach Abkühlen der Reaktionsmischung durch Filtration als Feuchtprodukt isoliert. Das überschüssig eingesetzte aromatische Amin kann aus dem Wasserdampfdestillat isoliert und für Folgeansätze ohne Nachteile bezüglich Ausbeute und Produktreinheit eingesetzt werden.

Als geeignete Tenside, in deren Gegenwart die Kondensation des 4-Chlor-3-nitro-benzolsulfochlorids mit einem Amin der genannten Formel (3) oder (4) vorgenommen wird, seien beispielsweise folgende genannt: Alkylsulfonate, Aralkylsulfonate, Alkylnaphthalinsulfonate, Polyglykolether, Alkylphenylpolyglykolether, Alkylnaphthylpolyglykolether und Kondensationsprodukte von Naphthalinsulfonsäuren mit Formaldehyd [vgl. hierzu Lehrbuch der Textilchemie von H. Rath, Springer-Verlag Berlin/Göttingen/Heidelberg (1963), Seiten 656-672].

Das Abwasser sowohl der Verfahrensstufe der Sulfochloridbildung als auch der Kondensation des Sulfochlorids mit dem Amin ist biologisch abbaubar, was aus ökologischen Gründen vorteilhaft ist. Ferner ist beim erfindungsgemäßen Verfahren vorteilhaft, daß durch die Verwendung von Thionylchlorid als Chlorierungsmittel weniger Abfallschwefelsäure anfällt.

Die verfahrensgemäß erhältlichen 2-Nitro-4-sulfamyl-diphenylamin-Farbstoffe sind geeignet zum Färben natürlicher oder synthetischer Fasermaterialien, wie beispielsweise Seide, Polyamidfasern, Polyesterfasern oder Polyetherfasern. Ferner werden sie als Grundkomponente bei der Herstellung wertvoller Farbstoffmischungen verwendet.

Die nachstehenden Beispiele sollen das erfindungsgemäße Verfahren näher erläutern, ohne es darauf zu beschränken.

### Beispiel 1 (4-Chlor-3-nitrobenzolsulfochlorid)

In einem Rundkolben werden 176,5 g Chlorsulfonsäure unter Stickstoffatmosphäre bei 100°C vorgelegt. Nach Zutropfen von 78,8 g o-Nitrochlorbenzol in ca. 30 Minuten wird 4 Stunden bei 105-110°C nachgerührt. Man läßt auf 70°C abkühlen und tropft 53,6 g Thionylchlorid im Verlaufe einer Stunde zu.
Dann wird 2 Stunden bei 75-80°C nachgerührt, wobei die entstehenden Abgase in 2 hintereinandergeschalteten, mit Wasser bzw. 13 %iger Natronlauge beschickten Waschflaschen absorbiert werden.
Nach Abkühlen auf Raumtemperatur wird das Reaktionsgemisch im Verlaufe einer Stunde auf 1500 g Eis und 1000 g Wasser getropft. Das auskristallisierte farblose 4-Chlor-3-nitrobenzolsulfochlorid wird abfiltriert und mit 2000 g Wasser gewaschen.
Man erhält 138 g wasserfeuchtes 4-Chlor-3-nitrobenzolsulfochlorid mit einem Wassergehalt von ca. 10 % und einem Reingehalt von ≧99,5 % (nach Trocknen), was einer Ausbeute von 97 % der Theorie entspricht. Der Schmelzpunkt beträgt 59-60°C (nach Trocknen).

### Beispiel 2 (4-Chlor-3-nitrobenzolsulfochlorid)

Man verfährt wie in Beispiel 1 beschrieben, mit dem Unterschied, daß man anstelle von 176,5 g nur 145,6 g Chlorsulfonsäure vorlegt. Man erhält 136 g wasserfeuchtes 4-Chlor-3-nitrobenzolsulfochlorid mit einem Wassergehalt von ca. 11 %, was einer Ausbeute von 94,9 % der Theorie entspricht.

### Beispiel 3 (4-Chlor-3-nitrobenzolsulfochlorid)

Man verfährt wie in Beispiel 1 beschrieben, jedoch mit dem Unterschied, daß man anstelle von 53,6 g Thionylchlorid 41,6 g Thionylchlorid einsetzt. Man erhält 137 g wasserfeuchtes 4-Chlor-3-nitrobenzolsulfochlorid mit einem Wassergehalt von ca. 10 %, was einer Ausbeute von 95,8 % der Theorie entspricht.

### Beispiel 4 (2-Nitrodiphenylamin-4-sulfanilid) (C.I. Disperse Yellow 42)

In einer Lösung von 58,3 g Natriumcarbonat in 270 g Wasser werden 97,6 g Anilin und 5,0 g eines Hilfsmittels auf Basis eines Kondensationsproduktes aus Naphthalinsulfonsäure und Formaldehyd suspendiert. Dann trägt man 138 g gemäß Beispiel 1 hergestelltes 4-Chlor-3-nitrobenzolsulfochlorid in 30 Minuten bei 20-25°C unter Außenkühlung ein und rührt anschließend 4 Stunden bei 40°C nach. Anschließend wird auf 100°C geheizt und ca. 9-10 Stunden gerührt. Der Verlauf der Reaktion wird durch HPLC verfolgt. Die Umsetzung wird abgebrochen, wenn die Zwischenstufe 4-Chlor-3-nitrobenzolsulanilid in Anteilen von weniger als 0,3-0,5 % im Raktionsgemisch vorliegt; der Anteil an 2-Nitrodiphenylamin-4-sulfanilid beträgt dann ca. 95-96 % (jeweils HPLC-Flächenprozentwerte, nicht geeicht). Nach Abkühlen auf Raumtemperatur wird der Ansatz mit 65 g Wasser verdünnt und anschließend das überschüssige Anilin durch Einleiten von Wasserdampf abgeblasen. Nach Abkühlen auf ca. 25°C wird das auskristallisierte 2-Nitrodiphenylamin-4-sulfanilid abgesaugt und mit 1000 g Wasser gewaschen. Man erhält 250 g einer 70 %igen Feuchtpaste des Farbstoffes 2-Nitrodiphenylamin-4-sulfanilid (C.I. Disperse Yellow 42) mit einem Reingehalt von 99,5 % (nach Trocknen), entsprechend einer Ausbeute von 94 % der Theorie. Schmelzpunkt (nach Trocknen): 154-155°C.

### Beispiel 5 (2-Nitrodiphenylamin-4-sulfanilid)

Man verfährt wie in Beispiel 4 beschrieben, mit dem Unterschied, daß man anstelle von 97,6 g Anilin 102,3 g Anilin einsetzt. Man erhält 270,5 g wasserfeuchtes, 65 %iges 2-Nitrodiphenylamin-4-sulfanilid, was einer Ausbeute von 95,2 % der Theorie entspricht.

### Beispiel 6 (2-Nitrodiphenylamin-4-sulfanilid)

Man verfährt wie in Beispiel 4 beschrieben, mit dem Unterschied, daß man anstelle von 58,3 g Natriumcarbonat 92,4 g Natriumhydrogencarbonat einsetzt. Man erhält 251,5 g wasserfeuchtes, 69,4 %iges 2-Nitrodiphenylamin-4-sulfanilid, was einer Ausbeute von 94,5 % der Theorie entspricht.

### Beispiel 7 (2-Nitrodiphenylamin-4-sulfanilid)

In einer Lösung von 76,0 g Kaliumcarbonat in 300 g Wasser werden 102,3 g Anilin und 5,0 g eines Tensids auf Basis eines Kondensationsprodukts aus Naphthalinsulfonsäure und Formaldehyd suspendiert. Dann werden unter Außenkühlung mit Eis 138 g nach Beispiel 1 hergestelltes 4-Chlor-3-nitrobenzolsulfochlorid bei maximal 5-10°C eingetragen. Man läßt innerhalb 1 Stunde auf Raumtemperatur erwärmen und rührt dann noch 3 Stunden bei 45°C. Anschließend heizt man auf 100°C und verfährt wie in Beispiel 4 beschrieben. Man erhält 237 g wasserfeuchtes, 69 %iges 2-Nitrodiphenylamin-4-sulfanilid, was einer Ausbeute von 89 % der Theorie entspricht.

### Beispiel 8 (2-Nitrodiphenylamin-4-sulf-p-toluidid)

In einer Lösung von 58,3 g Natriumcarbonat in 300 g Wasser werden 27,0 g 4-Aminotoluol und 7 g eines Tensids auf Basis eines Kondensationsprodukts aus Naphthalinsulfonsäure und Formaldehyd suspendiert. Dann werden 138 g nach Beispiel 1 hergestelltes 4-Chlor-3-nitrobenzolsulfochlorid bei max. 20°C eingetragen und danach 4-5 Stunden bei 35°C gerührt. Darauf gibt man 24,0 g Anilin zu und heizt auf 100°C. Nach beendeter Reaktion (HPLC-Endpunktbestimmung) wird, wie in Beispiel 4 beschrieben, aufgearbeitet.
Man erhält 274 g 2-Nitrodiphenylamin-4-sulf-p-toluidid als 65 %ige Feuchtpaste mit einem Reingehalt von 98 % (HPLC), was einer Ausbeute von 91 % der Theorie entspricht.

### Beispiel 9 (2-Nitrodiphenylamin-4-(N-butyl-)sulfonamid) (C.I. Disperse Yellow 59)

In einer Lösung von 58,3 g Natriumcarnat in 270 g Wasser werden 18,5 g n-Butylamin und 5 g eines Tensids auf Basis eines Kondensationsprodukts aus Naphthalinsulfonsäure und Formaldehyd suspendiert. Dann werden 138 g gemäß Beispiel 1 hergestelltes 4-Chlor-3-nitrobenzolsulfochlorid bei 15-20°C eingetragen. Anschließend rührt man 6 Stunden bei 30°C nach, gibt 24,0 g Anilin zu und rührt 10 Stunden bei 100°C. Darauf wird, wie in Beispiel 4 beschrieben, aufgearbeitet. Man erhält 196 g 2-Nitrodiphenylamin-4-(N-butyl-)sulfonamid (C.I. Disperse Yellow 59) (R₃ = H, R₄ = n-C₄H₉) in Form einer 85 %igen Feuchtpaste mit einem Reingehalt von 98,5 %, was einer Ausbeute von 92,8 % der Theorie entspricht.
Schmelzpunkt (nach Trocknen): 134°C.

## Patentansprüche

1. Verfahren zur Herstellung von 2-Nitro-4-sulfamyl-diphenylamin-Farbstoffen der allgemeinen Formel (1) 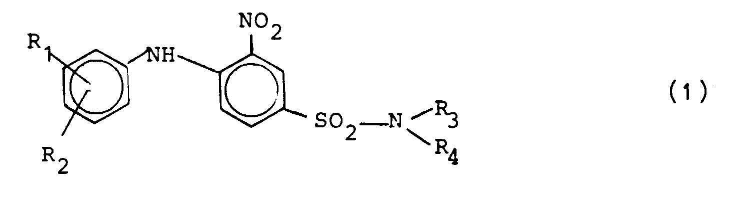 in welcher R₁ und R₂ je ein Wasserstoff-, Chlor- oder Bromatom oder eine Alkyl (C₁-C₄)-oder Alkoxy (C₁-C₄)-gruppe oder eine Phenoxygruppe, welche am Benzolkern durch Chlor- oder Bromatome oder Alkyl (C₁-C₄)-, Alkoxy (C₁-C₄)- oder Trifluormethylgruppen substituiert sein kann, oder eine Naphthyloxygruppe bedeuten, wobei R₁ und R₂ gleich oder verschieden sein können, und R₂ darüber hinaus auch eine -N(Alkyl (C₁-C₄))₂-, -NH (Alkyl (C₁-C₄))-, -NH-Alkyloyl (C₁-C₄)- oder -NH-Benzoylgruppe sein kann, R₃ und R₄ ein Wasserstoffatom oder eine Alkyl (C₁-C₄)-, Alkoxy (C₁-C₂)-alkyl (C₁-C₄)- oder Cycloalkyl (C₅-C₆)-gruppe bedeuten, wobei R₃ und R₄ gleich oder verschieden sein können, und R₄ darüber hinaus eine Phenylgruppe sein kann, welche durch Chlor- oder Bromatome oder Alkyl (C₁-C₄)-, Alkoxy (C₁-C₄)-, -N(alkyl (C₁-C₄))₂-, -NH(Alkyl (C₁-C₄))-, -NH-Alkyloyl (C₁-C₄)-, -NH-Benzoyl-, Phenoxy-oder Naphthyloxygruppen substituiert sein kann, wobei die Phenoxygruppen am Benzolkern durch Chlor- oder Bromatome oder Alkyl (C₁-C₄)-, Alkoxy (C₁-C₄)- oder Trifluormethylgruppen substituiert sein kann, dadurch gekennzeichnet, daß man o-Nitrochlorbenzol mit Chlorsulfonsäure bei Temperaturen von etwa 100-110°C sulfoniert zur 4-Chlor-3-nitrobenzolsulfonsäure der Formel (2) 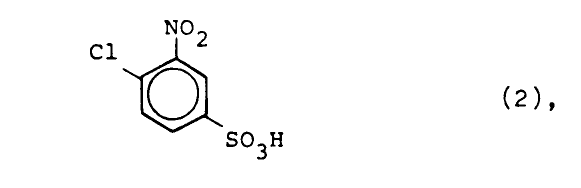 diese mit Thionylchlorid bei etwa 70-80°C in hochreines 4-Chlor-3-nitrobenzolsulfochlorid überführt, letzteres durch Aufbringen des Reaktionsgemisches auf Eis kristallin abscheidet und das erhaltene 4-Chlor-3-nitrobenzolsulfochlorid zunächst mit einem in einer wäßrigen Lösung eines basischen Kondensationshilfsmittels suspendierten oder gelösten aliphatischen oder aromatischen Amin der allgemeinen Formel 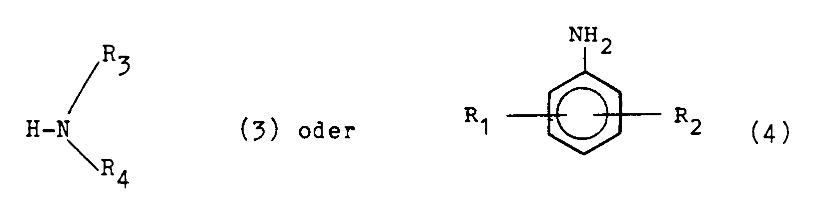 worin R₁, R₂, R₃ und R₄ die vorstehend genannten Bedeutungen haben, in Gegenwart eines ionischen oder nichtionischen Tensids zunächst bei Temperaturen von etwa 5 bis 50°C bei pH-Werten von 7,5 bis 12,5, dann mit einem in einer wässrigen Lösung eines basischen Kondensationshilfsmittels suspendierten oder gelösten aromatischen Amin der genannten allgemeinen Formel (4) bei Temperaturen von etwa 80 bis 100°C innerhalb des genannten pH-Bereichs in Genewart eines Tensids der genannten Art zu den Farbstoffen der genannten Formel (1) kondensiert.

2. Verfahren nach Anspruch 1, dadurch gekennzeichnet, daß man die Kondensation des 4-Chlor-3-nitrobenzolsulfochlorids mit einem Amin in Gegenwart eines Alkylsulfonats, Aralkylsulfonats, Alkylnaphthalinsulfonats, Polyglykolethers, Alkyl-phenylpolyglykolethers, Alkylnaphtylpolyglykolethers oder eines Kondensationsprodukts einer Naphthalinsulfonsäure mit Formaldehyd als Tensid durchführt.

3. Verfahren nach Anspruch 1, dadurch gekennzeichnet, daß man als basisches Kondensationshilfsmittel bei der Umsetzung des 4-Chlor-3-nitrobenzolsulfochlorids mit einem Amin Natriumcarbonat, Natriumhydrogencarbonat, Kaliumcarbonat, Kaliumhydrogencarbonat oder eine verdünnte wäßrige Lösung von Lithium-, Natrium- oder Kaliumhydroxid verwendet.

## Claims

1. A process for the preparation of 2-nitro-4-sulfamyldiphenylamine dyestuffs of the general formula (1) 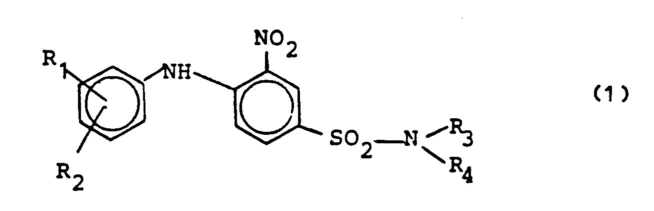 in which R₁ and R₂ each denote a hydrogen, chlorine or bromine atom or a C₁-C₄-alkyl or C₁-C₄-alkoxy group or a phenoxy group which is optionally substitued on the benzene nucleus by chlorine or bromine atoms or C₁-C₄-alkyl, C₁-C₄-alkoxy or trifluoromethyl groups, or denote a naphthoxy group, it being possible for R₁ and R₂ to be identical or different and, in addition, for R₂ also to be an -N-(C₁-C₄-alkyl)₂, -NH-(C₁-C₄-alkyl), -NH-(C₁-C₄-alkanoyl) or -NH-benzoyl group, and R₃ and R₄ denote a hydrogen atom or a C₁-C₄-alkyl, C₁-C₂-alkoxy-C₁-C₄-alkyl or c₅-C₆-cycloalkyl group, it being possible for R₃ and R₄ to be identical or different and, in addition, for R₄ to be a phenyl group which is optionally substituted by chlorine or bromine atoms or C₁-C₄-alkyl, C₁-C₄-alkoxy, -N-(C₁-C₄-alkyl)₂, -NH-(C₁-C₄-alkyl), -NH-(C₁-C₄-alkanoyl), -NH-benzoyl, phenoxy or naphthoxy groups, it being possible for the phenoxy groups to be substituted on the benzene nucleus by chlorine or bromine atoms or C₁-C₄-alkyl, C₁-C₄-alkoxy or trifluoromethyl groups, which comprises sulfonating o-nitrochlorobenzene with chlorosulfonic acid at temperatures of about 100-110°C to give 4-chloro-3-nitrobenzenesulfonic acid of the formula (2) 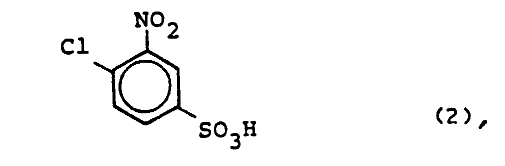 converting the latter by means of thionyl chloride at about 70-80°C into high-purity 4-chloro-3-nitrobenzenesulfochloride, precipitating the latter in crystalline form by bringing the reaction mixture into contact with ice, and subjecting the resulting 4-chloro-3-nitrobenzenesulfochloride to a condensation reaction first with an aliphatic or aromatic amine of the formula 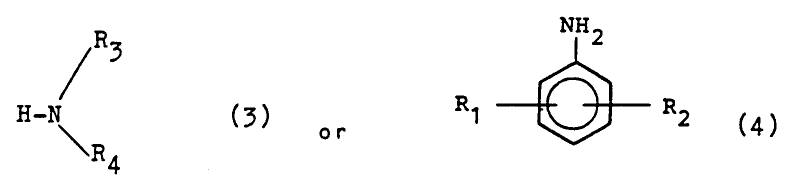 in which R₁, R₂, R₃ and R₄ have the meanings mentioned above, suspended or dissolved in an aqueous solution of a basic condensation agent, in the presence of an ionic or nonionic surfactant, initially at temperatures of about 5 to 50°C and at pH values from 7.5 to 12.5, and then with an aromatic amine of the formula (4) mentioned, suspended or dissolved in an aqueous solution of a basic condensation agent, at temperatures of about 80 to 100°C, within the pH range mentioned and in the presence of a surfactant of the type mentioned, to give the dyestuffs of the formula (1) mentioned.

2. The process as claimed in claim 1, wherein the condensation of 4-chloro-3-nitrobenzenesulfochloride with an amine is carried out in the presence of an alkyl-sulfonate, aralkylsulfonate, alkylnaphthalenesulfonate, polyglycol ether, alkylphenyl polyglycol ether, alkyl-naphthyl polyglycol ether or a condensation product of a naphthalenesulfonic acid with formaldehyde as the surfactant.

3. The process as claimed in claim 1, wherein the basic condensation agent used in the reaction of 4-chloro-3-nitrobenzenesulfochloride with an amine is sodium carbonate, sodium bicarbonate, potassium carbonate or potassium bicarbonate or a dilute aqueous solution of lithium, sodium or potassium hydroxide.

## Revendications

1. Procédé pour préparer des colorants, en l'espèce des 2-nitro-4-sulfamoyl-diphénylamines, qui répondent à la formule générale 1 : 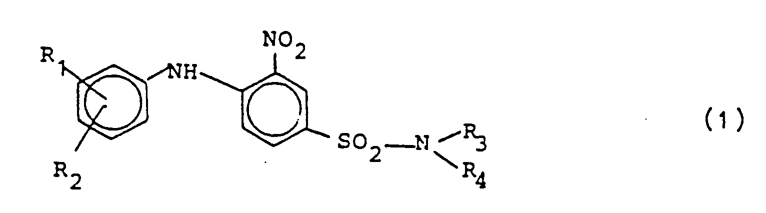 dans laquelle :
R₁ et R₂ représente chacun un atome d'hydrogène, de chlore ou de brome, un alkyle en C₁-C₄, un alcoxy en C₁-C₄, un radical phénoxy dont le noyau benzénique porte des atomes de chlore ou de brome ou des radicaux alkyles en C₁-C₄, alcoxy en C₁-C₄ ou trifluorométhyles, ou un radical naphtyloxy, R₁ et R₂ pouvant être identiques ou différents, et R₂ peut en outre représenter un radical -N(alkyl(C₁-C₄))₂, -NH-(alkyl(C₁-C₄)), -NH-(alkyloyl(C₁-C₄)) ou -NH-benzoyle,
R₃ et R₄ représentent chacun un atome d'hydrogène, un alkyle en C₁-C₄, un alcoxy(C₁-C₂)-alkyle(C₁-C₄) ou un cycloalkyle en C₅ ou C₆, R₃ et R₄ pouvant être identiques ou différents, et R₄ peut en outre représenter un radical phényle éventuellement porteur d'atomes de chlore ou de brome ou de radicaux alkyles en C₁-C₄, alcoxy en C₁-C₄, -N(alkyl(C₁-C₄))₂, -NH-(alkyl(C₁-C₄)), -NH-(alkyloyl(C₁-C₄)), -NH-benzoyl, phénoxy ou naphtyloxy, les radicaux phénoxy pouvant porter, sur le noyau benzénique, des atomes de chlore ou de brome ou des radicaux alkyles en C₁-C₄, alcoxy en C₁-C₄ ou trifluorométhyles,
procédé caractérisé en ce qu'on sulfone l'o-nitro-chlorobenzène au moyen de l'acide chlorosulfonique à des températures comprises entre environ 100 et 110°C, pour obtenir l'acide 4-chloro-3-nitro-benzène-sulfonique de formule 2 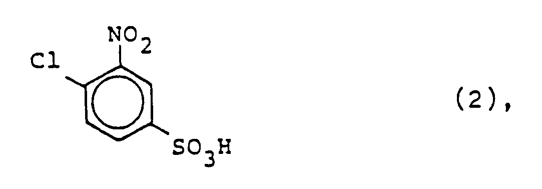 on transforme celui-ci, par réaction avec le chlorure de thionyle, à une température d'environ 70 à 80°C, en chlorure de 4-chloro-3-nitro-benzène-sulfonyle de haute pureté, on fait cristalliser ce dernier en versant le mélange réactionnel sur de la glace, et on condense le chlorure de 4-chloro-3-nitro-benzène-sulfonyle obtenu, d'abord avec une amine aliphatique ou aromatique répondant à l'une des formules générales 3 et 4 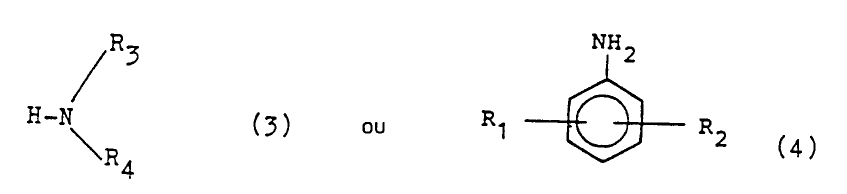 (dans lesquelles R₁, R₂, R₃ et R₄ ont les significations qui leur ont été données ci-dessus), en suspension ou en solution dans une solution aqueuse d'un adjuvant de condensation basique, en présence d'un surfactif ionique ou non ionique, à des températures d'environ 5 à 50°C et à des pH de 7,5 à 12,5, puis avec une amine aromatique de formule générale 4 (voir ci-dessus) en suspension ou en solution dans une solution aqueuse d'un adjuvant de condensation basique, à des températures d'environ 80 à 100°C, à l'intérieur de l'intervalle de pH indiqué et en présence d'un surfactif du type indiqué, pour obtenir les colorants répondant à la formule 1 définie ci-dessus.

2. Procédé selon la revendication 1 caractérisé en ce que la condensation du chlorure de 4-chloro-3-nitro-benzène-sulfonyle avec une amine est effectuée en présence d'un surfactif qui est un alcane-sulfonate, un arylalcane-sulfonate, un alkylnaphtalène-sulfonate, un éther polyglycolique, un éther polyglycolique d'alkylphénol, un éther polyglycolique d'alkylnaphtol ou un produit de condensation d'un acide naphtalène-sulfonique avec le formaldéhyde.

3. Procédé selon la revendication 1 caractérisé en ce que, dans la réaction du chlorure de 4-chloro-3-nitrobenzène-sulfonyle avec une amine, on utilise, avant adjuvant de condensation basique, du carbonate de sodium, de l'hydrogénocarbonate de sodium, du carbonate de potassium, de l'hydrogénocarbonate de potassium ou une solution aqueuse diluée d'hydroxyde de lithium, de sodium ou de potassium.
